# EUROPEAN PATENT APPLICATION

(11) **EP 2 639 950 A1**
(43) Date of publication of application: **18.09.2013**
(21) Application number: 11839244.8
(22) Date of filing: 30.09.2011
(51) Int. Cl.: H02M 1/44, H02M 7/48

(54) **FILTER CIRCUIT, AND BIDIRECTIONAL POWER CONVERSION APPARATUS PROVIDED WITH SAME**

(30) Priority: 09.11.2010 JP 2010250954
(71) Applicant: Kabushiki Kaisha Yaskawa Denki, Kitakyushu-shi, Fukuoka 806-0004 (JP)
(72) Inventor: HIGUCHI, Tsuyoshi, Kitakyushu-shi Fukuoka 806-0004 (JP); HARA, Hidenori, Kitakyushu-shi Fukuoka 806-0004 (JP)
(74) Representative: Grünecker, Kinkeldey, Stockmair & Schwanhäusser
(86) International application number: PCT/JP2011/072621
(87) International publication number: WO 2012/063573

(57) **Abstract**

A filter circuit is provided that is used in a power conversion apparatus that exchanges electrical energy bidirectionally and reduces conduction noise and harmonics regardless of the traveling direction of electrical energy. The filter circuit includes a first filter (4) that includes two first capacitors (C1) connected in series, two single-phase AC reactors (L2) connected to one ends of the two first capacitors, respectively, a second capacitor (C2) connected at one end to a neutral point of the two first capacitors (C1), and a third capacitor (C3) connected between another ends of the two single-phase AC reactors, and a second filter (2) that includes two common mode chokes (L3) and two fourth capacitors (C4) connected in series between one ends of the two common mode chokes (L3).

## Description

### Field

The present invention relates to a filter circuit and a bidirectional power conversion apparatus including thereof.

### Background

Examples of a power conversion apparatus that exchanges electrical energy bidirectionally include a power conversion apparatus that includes a converter that converts supplied power to DC power and an inverter that converts DC power to AC power, and a matrix converter apparatus configured by using bidirectional semiconductor switches each of which is configured by connecting two switching elements in antiparallel to each other and can be turned on and off independently for each direction.
One example of the power conversion apparatus is a current source inverter described in Patent Literature 1. The current source inverter in Patent Literature 1 is composed of a converter that performs control of the magnitude of direct current while converting alternate current to direct current, a DC reactor that is connected to the DC output side of the converter and smoothes the ripple of the direct current, an inverter that is connected to the DC reactor and converts the direct current to AC voltage having a variable voltage and a variable frequency, and a load connected to the output side of the inverter, and includes a filter AC reactor and a filter capacitor, which absorb harmonics, on the input side and a filter capacitor, which absorbs harmonics, on the output side.

### Citation List

### Patent Literature

Patent Literature 1: Japanese Patent No. 2755609

### Summary

### Technical Problem

However, the above-described current source inverter is provided with a filter circuit on each of the input side and the output side, i.e., the input filter on the input side and the output filter on the output side.
An object of the present invention is to provide a filter circuit that is used in a power conversion apparatus that exchanges electrical energy bidirectionally, such as a powering operation and a regenerating operation or a discharging operation and a charging operation, and reduces conduction noise and harmonics regardless of the traveling direction of the electrical energy and a bidirectional power conversion apparatus including thereof.

### Solution to Problem

To solve the problem, a filter circuit according to an aspect of the present invention includes a first filter that includes two first capacitors connected in series, two single-phase AC reactors connected to one ends of the two first capacitors, respectively, a second capacitor connected at one end to a neutral point of the two first capacitors, and a third capacitor connected between another ends of the two single-phase AC reactors; and a second filter that includes two common mode chokes, and two fourth capacitors connected in series between one ends of the two common mode chokes, wherein another end of the second capacitor is connected to a neutral point of the two fourth capacitors.

Furthermore, the bidirectional power conversion apparatus includes the filter circuit, and bidirectional power converter that includes a DC voltage input/output terminal and an AC voltage input/output terminal, in which the bidirectional power converter is a current source inverter that uses the first capacitors as a smoothing capacitor and is capable of converting power bidirectionally, the first filter is arranged between the AC voltage input/output terminal and a commercial power source or a load, and the second filter is arranged between the DC voltage input/output terminal and a DC voltage source.

Furthermore, the bidirectional power conversion apparatus includes a control unit that performs PWM control on the bidirectional power conversion unit in accordance with a voltage reference signal; and a first switch capable of selectively connecting the first filter to any of the commercial power source and the load, in which the first switch outputs a state signal of the selective connection to the control unit.

Furthermore, the bidirectional power conversion apparatus includes a DC voltage detector that detects a DC voltage of the DC voltage source and outputs a DC voltage signal to the control unit; and an AC voltage detector that outputs a single-phase AC voltage signal to the control unit, in which when the first switch connects the first filter to the commercial power source, the control unit performs PWM control on the bidirectional power conversion unit such that the voltage reference signal matches the DC voltage signal, and, when the first switch connects the first filter to the load, the control unit performs PWM control on the bidirectional power conversion unit such that the voltage reference signal matches the single-phase AC voltage signal.

Furthermore, the bidirectional power conversion unit includes a DC reactor and a matrix converter circuit, the DC reactor is connected at one end to a positive polarity side of the DC voltage input/output terminal, the matrix converter circuit includes first and fourth bidirectional switches connected at one ends to another end of the DC reactor, second and fifth bidirectional switches connected at one ends to a positive polarity side of the DC voltage input/output terminal, and third and sixth bidirectional switches connected at one ends to a negative polarity side of the DC voltage input/output terminal, another ends of the first to third bidirectional switches are connected to a terminal U side of the AC voltage input/output terminal, and another ends of the fourth to sixth bidirectional switches are connected to a terminal V side of the AC voltage input/output terminal.

Furthermore, the bidirectional power conversion unit includes a DC reactor and a matrix converter circuit, the DC reactor is connected at one end to a positive polarity side of the DC voltage input/output terminal, the matrix converter circuit includes first and third bidirectional switches connected at one ends to another end of the DC reactor, and second and fourth bidirectional switches connected at one ends to a negative polarity side of the DC voltage input/output terminal, another ends of the first and second bidirectional switch are connected to a terminal U side of the AC voltage input/output terminal, and another ends of the third and fourth bidirectional switches are connected to a terminal V side of the AC voltage input/output terminal.

Furthermore, the bidirectional power conversion apparatus includes a second switch that selects a polarity of the DC voltage source and connects the DC voltage source to the second filter, in which the bidirectional power conversion unit includes a DC reactor and a matrix converter circuit, the DC reactor is connected at one end to a positive polarity side of the DC voltage input/output terminal, the second switch outputs a state signal of selected polarity to the control unit, the matrix converter circuit includes first and third unidirectional switches that are connected at one ends to another end of the DC reactor and performs power conversion from the DC voltage input/output terminal side to the AC voltage input/output terminal side, and second and fourth unidirectional switches that are connected at one ends to a negative polarity side of the DC voltage input/output terminal and performs power conversion from the AC voltage input/output terminal side to the DC voltage input/output terminal side, another ends of the first and second unidirectional switches are connected to a terminal U side of the AC voltage input/output terminal, and another ends of the third and fourth unidirectional switches are connected to a terminal V side of the AC voltage input/output terminal.

Furthermore, in a case where the second switch connects the DC voltage source to the second filter with positive polarity and the load is connected, the control unit performs PWM control on the bidirectional power conversion unit such that, when a potential of the terminal U of the AC voltage input/output terminal is equal to or larger than a potential of the terminal V, electrical energy of the DC voltage source is supplied to the load by turning the first and second unidirectional switches on, then turning the fourth unidirectional switch on, and then turning the second unidirectional switch off, and, when a potential of the terminal U of the AC voltage input/output terminal is smaller than a potential of the terminal V, electrical energy of the DC voltage source is supplied to the load by turning the third and fourth unidirectional switches on, then turning the second unidirectional switch on, and then turning the fourth unidirectional switch off, and in a case where the second switch connects the DC voltage source to the second filter with reverse polarity and the commercial power source is connected, the control unit performs PWM control on the bidirectional power conversion unit such that, when a potential of the terminal U of the AC voltage input/output terminal is equal to or larger than a potential of the terminal V, electrical energy of the commercial power source is supplied to the DC voltage source by turning the second and third unidirectional switches on, then turning the first unidirectional switch on, and then turning the third unidirectional switch off, and, when a potential of the terminal U of the AC voltage input/output terminal is smaller than a potential of the terminal V, electrical energy of the commercial power source is supplied to the DC voltage source by turning the first and fourth unidirectional switches on, then turning the third unidirectional switch on, and then turning the first unidirectional switch off.

### Advantageous Effects of Invention

According to the present invention, because the filter circuit has functions as both the input filter and the output filter, a bidirectional power conversion apparatus that includes the filter circuit can reduce conduction noise and harmonics on the power source side and conduction noise on the load side.

### Brief Description of Drawings

FIG. 1 is a configuration diagram of a bidirectional power conversion apparatus according to a first embodiment of the present invention.
FIG. 2 is a configuration diagram of a bidirectional power conversion apparatus according to a second embodiment of the present invention.
FIG. 3 is a configuration diagram of a bidirectional power conversion apparatus according to a third embodiment of the present invention.

### Description of Embodiments

Embodiments according to the present invention are described below with reference to the drawings. The same components are denoted by the same reference numerals and a duplicate explanation is omitted.

### <First Embodiment>

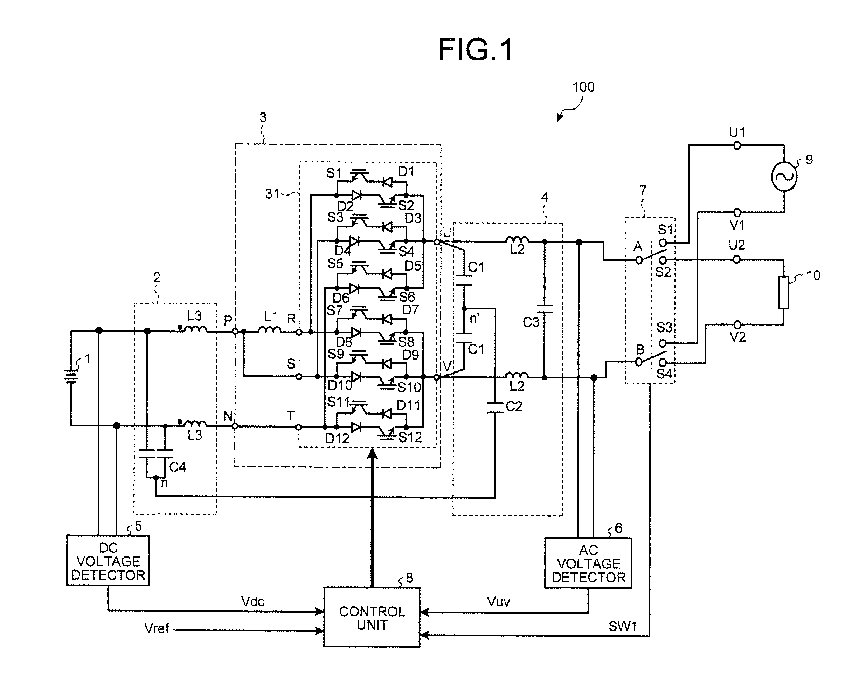

First, the configuration of a bidirectional power conversion apparatus 100 according to the first embodiment of the present invention will be described with reference to FIG. 1.

As illustrated in FIG. 1, the bidirectional power conversion apparatus 100 according to the first embodiment of the present invention includes a DC voltage source 1, an input filter 2 (second filter), a bidirectional power conversion unit 3, an output filter 4 (first filter), a DC voltage detector 5, an AC voltage detector 6, a switch 7 (first switch), a control unit 8, a commercial power source 9, and a load 10. For convenience sake, an explanation will be given where the DC voltage source 1 side of the bidirectional power conversion unit 3 is the input side and the side of the bidirectional power conversion unit 3 on which the commercial power source 9 and the load 10 connected via the switch 7 are present is the output side when the electrical energy is traveling from the DC voltage source 1 to the load 10.

For the DC voltage source 1, a battery that has a function as a DC voltage source is used. The input filter 2 is the second filter and includes common mode chokes L3 and a plurality of capacitors C4 connected in series. The common mode chokes L3 are connected with the same polarity to the terminals of the DC voltage source 1. The capacitors C4 connected in series are connected between the terminals of the DC voltage source 1. Furthermore, the neutral point n of the capacitors C4 is connected to the connection point (neutral point n') of capacitors C1 connected in series, which will be described later, via a capacitor C2.

The bidirectional power conversion unit 3 includes a matrix converter circuit 31 and a DC reactor L1, and moreover includes terminals P and N on the input side and terminals U and V on the output side. Furthermore, the matrix converter circuit 31 includes terminals R, S, and T on the input side, and the terminal P and the terminal N are connected to the terminal S and the terminal T, respectively.
The matrix converter circuit 31 includes IGBTs (Insulated Gate Bipolar Transistors) (S1 to S12) that are semiconductor switching elements and diodes (D1 to D12), and causes the IGBTs, each operating as a unidirectional switch, to function as six bidirectional switches (hereinafter, six switches are also referred to as first to sixth bidirectional switches) by connecting the IGBTs two by two in antiparallel to each other. One ends of the first and fourth bidirectional switches are connected to the DC reactor L1 at the terminal R, one ends of the second and fifth bidirectional switches are connected to the positive polarity side (P) of the DC voltage input/output terminals (P, N) at the terminal S, and one ends of the third and sixth bidirectional switches are connected to the negative polarity side (N) of the DC voltage input/output terminals (P, N) at the terminal T. Moreover, the other ends of the first to third bidirectional switches are connected to the terminal U of the AC voltage input/output terminals (U, V) and the other ends of the fourth to sixth bidirectional switches are connected to the terminal V of the AC voltage input/output terminals (U, V).

One end of the DC reactor L1 is connected to the positive polarity side of the DC voltage source 1 via one coil of the common mode chokes L3 and the terminal S and the other end of the DC reactor L1 is connected to one ends of the first and fourth bidirectional switches at the terminal R.
The matrix converter circuit 31 performs switching in accordance with a gate signal from the control unit 8 and bidirectionally exchanges electrical energy (power conversion) between the DC voltage source 1 connected to the input side and the commercial power source 9 or the load 10 connected to the output side.

The bidirectional power conversion unit 3 is configured as above and operates as the equivalent of a current source inverter that has a step-up function and is capable of regenerating power.

The output filter 4 is the first filter and includes the capacitors C1 connected in series, the capacitor C2, a capacitor C3, and single-phase AC reactors L2 that are two normal mode devices. The output filter 4 is such that the ends of the capacitors C1 connected in series are connected to the terminals U and V, respectively, and the ends of the capacitor C3 are connected to terminals A and B of the switch 7, respectively.
One of the single-phase AC reactors L2 is connected to the terminal U of the bidirectional power conversion unit 3 and one end of the capacitor C3 and the other of the single-phase AC reactors L2 is connected to the terminal V and the other end of the capacitor C3. In other words, the configuration is such that both terminals of the single-phase AC reactors L2 function as input/output terminals and the capacitors C1 and the matrix converter circuit 31 are connected in parallel at one end side of the single-phase AC reactors L2.

The two single-phase AC reactors L2 that are normal mode devices are arranged to the terminal U and the terminal V, respectively; therefore, for the common mode path, they function with an inductance that is half the inductance of the single-phase AC reactors L2. Thus, the inductance of the common mode chokes L3 can be reduced and the effect of reducing conduction noise can also be obtained.
The capacitors C1 connected in series are connected in parallel between the output terminals U and V of the bidirectional power conversion unit 3. Because the connection point (neutral point n') of the capacitors C1 is connected to the neutral point n of the capacitors C4 via the capacitor C2, the capacitors C1 function as a smoothing capacitor of the bidirectional power conversion unit 3 and obtain an effect of reducing conduction noise and harmonics.

The DC voltage detector 5 detects the voltage of the DC voltage source 1 and outputs it to the control unit 8 as a DC voltage signal Vdc.
The AC voltage detector 6 detects the voltage across both ends of the capacitor C3 and outputs it to the control unit 8 as a single-phase AC voltage signal Vuv.
The switch 7 includes the terminals A, B, and S1 to S4. The switch 7 has a function of selectively connecting the commercial power source 9 or the load 10 and outputting the selected state information to the control unit 8 as a switching signal SW1 (state signal). When the switch 7 selects the commercial power source 9, the switch 7 switches the terminal A to S1 and switches the terminal B to S3, and, when the switch 7 selects the load 10, the switch 7 switches the terminal A to S2 and switches the terminal B to S4. The switching reference to the switch 7 is applied from a not-shown upper-level apparatus.

The control unit 8 performs PWM control in accordance with a voltage reference signal Vref, the DC voltage signal Vdc, the single-phase AC voltage signal Vuv, and the switching signal SW1 and outputs a gate signal to the bidirectional power conversion unit 3. The voltage reference signal Vref changes in conjunction with the switching signal SW1, and a DC voltage reference or a single-phase AC voltage reference is applied to the control unit 8 from a not-shown upper-level apparatus.
With this configuration, the switch 7 is switched by the reference from the upper-level apparatus and its state information is input to the control unit 8 as the switching signal SW1. When the control unit 8 determines that the commercial power source 9 connected between the terminals S1 and S3 of the switch 7 is selected in accordance with the switching signal SW1, the control unit 8 performs power conversion control in a direction in which the DC voltage source 1 is charged such that the voltage reference signal Vref matches the DC voltage signal Vdc. When the control unit 8 determines that the load 10 connected between the terminals S2 and S4 of the switch 7 is selected, the control unit 8 performs power conversion control in a direction in which the DC voltage source 1 is discharged such that the voltage reference signal Vref matches the single-phase AC voltage signal Vuv.

Moreover, in the bidirectional power conversion apparatus 100 according to the first embodiment, the capacitors C4 connected in series are connected to the positive polarity side of the common mode chokes L3 in FIG. 1; however, the capacitors C4 may be connected to the negative polarity side of the common mode chokes L3 or the configuration may be such that the common mode chokes L3 are omitted.
In this case, although the resonance frequency is affected due to the stray capacitance formed at the DC voltage source 1 or the inductance of the common mode path, similar effects are obtained for reduction of conduction noise and harmonics.

As described above, in the output filter 4 of the bidirectional power conversion apparatus 100 according to the present embodiment, components are commonalized by using the capacitors C1 both for smoothing the ripple of the direct current and for reducing conduction noise and harmonics, and the impedance in the path that is a bypass for conduction noise is reduced by connecting the neutral points n and n' via the capacitor C2.
In this manner, in the case of charging in which electrical energy travels from the commercial power source 9 to the DC voltage source 1, the output filter 4 can reduce conduction noise and harmonics flowing to the commercial power source 9 side, and in the case of discharging in which electrical energy travels from the DC voltage source 1 to the load 10, the output filter 4 can reduce conduction noise to the load 10.

### <Second Embodiment>

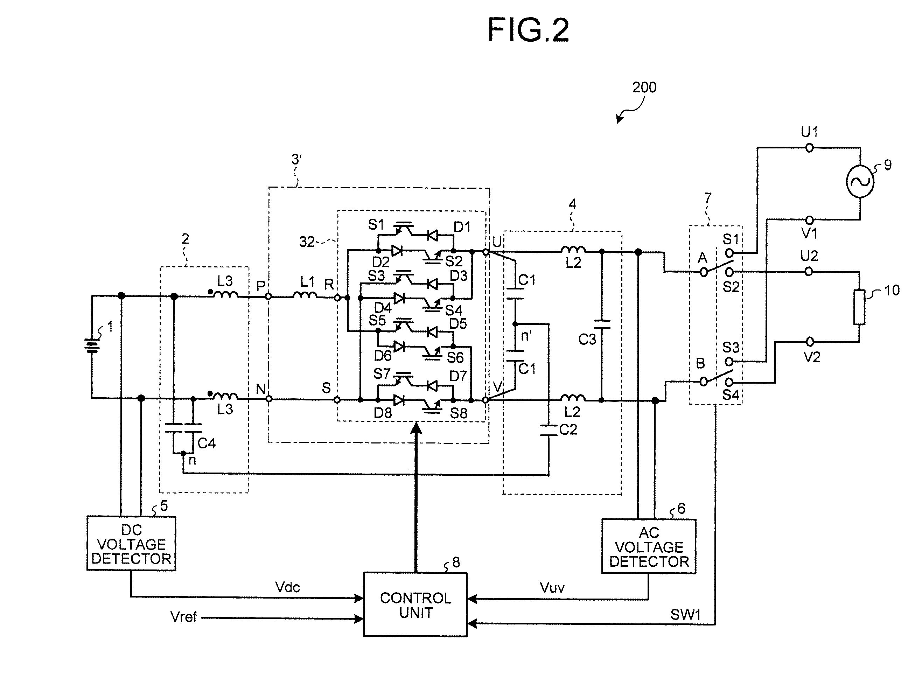

The bidirectional power conversion apparatus 100 according to the first embodiment of the present invention is described above. Next, a bidirectional power conversion apparatus 200 according to the second embodiment of the present invention will be described with reference to FIG. 2.

The bidirectional power conversion apparatus 200 according to the second embodiment is configured in a similar manner to the bidirectional power conversion apparatus 100 according to the first embodiment except that the bidirectional power conversion apparatus 200 includes a bidirectional power conversion unit 3' instead of the bidirectional power conversion unit 3. Therefore, in the following, for convenience' sake of explanation, a duplicate explanation is appropriately omitted and points different from the first embodiment will be mainly described.

The bidirectional power conversion unit 3' includes a matrix converter circuit 32 and the DC reactor L1, and moreover includes the terminals P and N on the input side and the terminals U and V on the output side. Furthermore, the matrix converter circuit 32 includes the terminals R and S on the input side, and the terminal P is connected to the terminal R via the DC reactor L1 and the terminal N is directly connected to the terminal S.
The matrix converter circuit 32 includes IGBTs (S1 to S8) that are semiconductor switching elements and diodes (D1 to D8) and causes the IGBTs, each operating as a unidirectional switch, to function as four bidirectional switches (hereinafter, four switches are also referred to as first to fourth bidirectional switches) by connecting the IGBTs two by two in antiparallel to each other. One ends of the first and third bidirectional switches are connected to the DC reactor L1 at the terminal R and one ends of the second and fourth bidirectional switches are connected to the negative polarity side (N) of the DC voltage input/output terminals (P, N) at the terminal S. Moreover, the other ends of the first and second bidirectional switches are connected to the terminal U of the AC voltage input/output terminals (U, V) and the other ends of the third and fourth bidirectional switches are connected to the terminal V of the AC voltage input/output terminals (U, V).

One end of the DC reactor L1 is connected to the positive polarity side of the DC voltage source 1 and the terminal S via one coil of the common mode chokes L3 and the other end of the DC reactor L1 is connected to one ends of the first and third bidirectional switches at the terminal R.
The matrix converter circuit 32 performs switching in accordance with a gate signal from the control unit 8 and bidirectionally exchanges electrical energy (power conversion) between the DC voltage source 1 connected to the input side and the commercial power source 9 or the load 10 connected to the output side.

Although the bidirectional power conversion apparatus 200 according to the present embodiment is different from the bidirectional power conversion apparatus 100 according to the first embodiment in the above points, the bidirectional power conversion apparatus 200 operates as the equivalent of a current source inverter that has a step-up function and is capable of regenerating power in a similar manner to the bidirectional power conversion apparatus 100 according to the first embodiment and obtains a similar effect.

### <Third Embodiment>

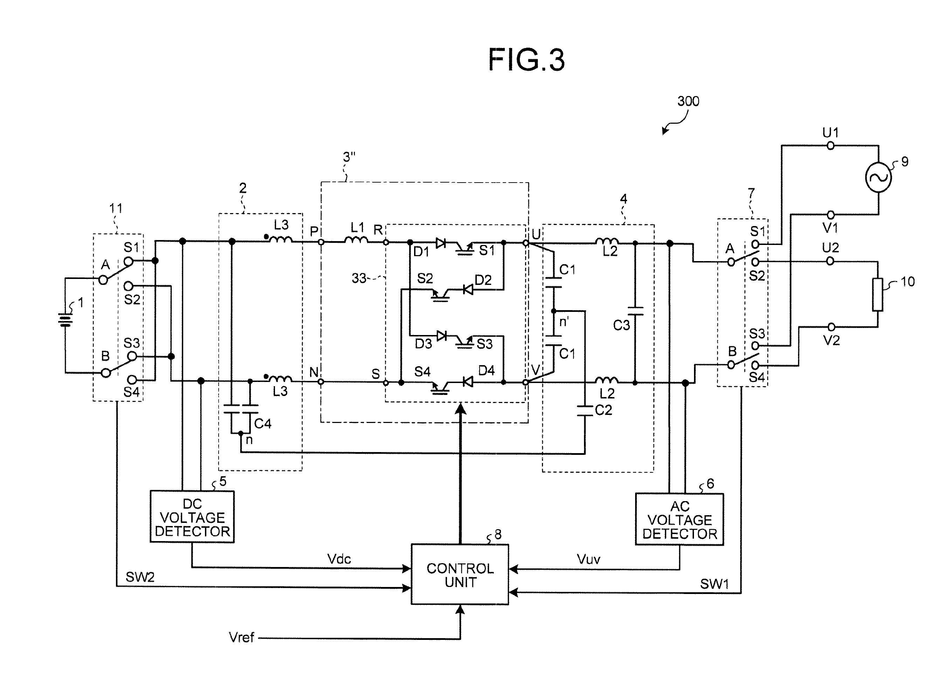

Next, a bidirectional power conversion apparatus 300 according to the third embodiment of the present invention will be described with reference to FIG. 3.

The bidirectional power conversion apparatus 300 according to the third embodiment is configured in a similar manner to the bidirectional power conversion apparatus 100 according to the first embodiment except that the bidirectional power conversion apparatus 300 includes a bidirectional power conversion unit 3" instead of the bidirectional power conversion unit 3 and therefore additionally includes a switch 11 (second switch). Accordingly, in the following, for convenience' sake of explanation, a duplicate explanation is appropriately omitted and points different from the first embodiment will be mainly described.

The bidirectional power conversion unit 3" includes a matrix converter circuit 33 and the DC reactor L1, and moreover includes the terminals P and N on the input side and the terminals U and V on the output side. Furthermore, the matrix converter circuit 33 includes the terminals R and S on the input side, and the terminal P is connected to the terminal R via the DC reactor L1 and the terminal N is directly connected to the terminal S.
The matrix converter circuit 33 is configured by bridge-connecting four unidirectional switches (hereinafter, four switches are also referred to as first to fourth unidirectional switches) that include IGBTs (S1 to S4) and diodes (D1 to D4). One ends of the first and third unidirectional switches are connected to the DC reactor L1 at the terminal R and one ends of the second and fourth unidirectional switches are connected to the negative polarity side (N) of the DC voltage input/output terminals (P, N) at the terminal S. Moreover, the other ends of the first and second unidirectional switches are connected to the terminal U of the AC voltage input/output terminals (U, V) and the other ends of the third and fourth unidirectional switches are connected to the terminal V of the AC voltage input/output terminals (U, V).

One end of the DC reactor L1 is connected to one coil of the common mode chokes L3 at the terminal P and the other end of the DC reactor L1 is connected to one ends of the first and third unidirectional switches at the terminal R.

The switch 11 includes terminals A, B, and S1 to S4 and is provided between the DC voltage source 1 and the input filter 2. The switch 11 has a function of reversing the polarity of the DC voltage source 1, selecting the polarity and connecting the DC voltage source 1 to the input filter 2, and outputting the state information on the selected polarity to the control unit 8 as a switching signal SW2 (state signal). The terminal A of the switch 11 is connected to the positive polarity side of the DC voltage source 1 and the terminal B of the switch 11 is connected to the negative polarity side of the DC voltage source 1. When the switch 11 connects the DC voltage source 1 to the input filter 2 with positive polarity, the switch 11 switches the terminal A to S1 and switches the terminal B to S3. When the switch 11 connects the DC voltage source 1 to the input filter 2 with reverse polarity, the switch 11 switches the terminal A to S2 and switches the terminal B to S4. The switching reference to the switch 11 is applied from a not-shown upper-level apparatus.

The control unit 8 performs PWM control in accordance with the voltage reference signal Vref, the DC voltage signal Vdc, the single-phase AC voltage signal Vuv, and the switching signals SW1 and SW2 and outputs a gate signal to the bidirectional power conversion unit 3''. The voltage reference signal Vref changes in conjunction with the switching signals SW1 and SW2 and a DC voltage reference or a single-phase AC voltage reference is applied to the control unit 8 from a not-shown upper-level apparatus.

Next, calculation of a gate signal performed by the control unit 8 will be briefly described.
When the control unit 8 determines that the load 10 and the DC voltage source 1 are connected with positive polarity and (potential Vu of terminal U ≥ potential Vv of terminal V) is satisfied in accordance with the switching signals SW1 and SW2 and the single-phase AC voltage signal Vuv, the control unit 8 supplies the electrical energy of the DC voltage source 1 to the load 10 by the following operation.
Specifically, the control unit 8 turns the first and second unidirectional switches on and accumulates the energy in the DC reactor L1 by flowing current in the path of the positive polarity side of the DC voltage source 1 → the DC reactor L1 → the diode (D1) → the IGBT (S1) → the diode (D2) → the IGBT (S2) → the negative polarity side of the DC voltage source 1.

Next, the control unit 8 turns the fourth unidirectional switch on. At this point, because the diode (D4) is in the reverse biased state, current does not flow and the current path does not change.
Next, the control unit 8 turns the second unidirectional switch off and turns the diode (D4) on so as to flow the current in the path of the positive polarity side of the DC voltage source 1 → the DC reactor L1 → the diode (D1) → the IGBT (S1) → the capacitors C1 and the load 10 → the diode (D4) → the IGBT (S4) → the negative polarity side of the DC voltage source 1 with the DC reactor L1 as a current source, thereby discharging the electrical energy in the DC reactor L1 to the capacitors C1 and the load 10.
In this manner, the electrical energy in the DC voltage source 1 is supplied to the load 10.

In the case where (potential Vu of terminal U < potential Vv of terminal V), the control unit 8 turns the third and fourth unidirectional switches on, then turns the second unidirectional switch on, and then turns the fourth unidirectional switch off, thereby supplying the electrical energy of the DC voltage source 1 to the load 10.

Moreover, when the control unit 8 determines that the commercial power source 9 and the DC voltage source 1 are connected with reverse polarity and (potential Vu of terminal U ≥ potential Vv of terminal V) is satisfied in accordance with the switching signals SW1 and SW2 and the single-phase AC voltage signal Vuv, the control unit 8 turns the second and third unidirectional switches on, then turns the first unidirectional switch on, and then turns the third unidirectional switch on, thereby supplying the electrical energy of the commercial power source 9 to the DC voltage source 1.

In the case where (potential Vu of terminal U < potential Vv of terminal V), the control unit 8 turns the first and fourth unidirectional switches on, then turns the third unidirectional switch on, and then turns the first unidirectional switch off, thereby supplying the electrical energy of the commercial power source 9 to the DC voltage source 1.

Accordingly, even in the bidirectional power conversion unit 3", which includes four unidirectional switches configured by bridge-connecting them, electrical energy can be controlled bidirectionally by controlling the control unit 8 in synchronization with the switch 7 and the switch 11, i.e., a single-phase AC voltage obtained by stepping up the voltage of the DC voltage source 1 and performing power conversion thereon is supplied to the load 10 or the DC voltage obtained by stepping down the voltage of the commercial power source 9 and performing power conversion thereon is supplied to the DC voltage source 1.

Although the bidirectional power conversion apparatus 300 according to the present embodiment is different from the bidirectional power conversion apparatus 100 according to the first embodiment in the above points, the bidirectional power conversion apparatus 300 operates as the equivalent of a current source inverter that has a step-up function and is capable of regenerating power in a similar manner to the bidirectional power conversion apparatus 100 according to the first embodiment and obtains a similar effect.

The embodiments of the present invention are described above. Various modifications may be made to the above embodiments by those skilled in the art without departing from the scope of the present invention and the above embodiments and the methods by the modified examples may be appropriately combined. In other words, it is obvious that such modified technologies and the like are also included in the technical scope of the present invention.

For example, the explanation is given of the unidirectional switching element in which the IGBT and the diode are connected in series; however, a reverse blocking IGBT (RB-IGBT: Reverse Blocking-Insulated Gate Bipolar Transistor) may be used as the unidirectional switching element and the diode may be omitted. If the RB-IGBT is applied to the bidirectional switch, the bidirectional module can be configured without using a reverse breakdown voltage protective diode that is needed for the IGBT. Reference Signs List

- 1: DC voltage source
- 2: input filter (second filter)
- 3, 3', 3'': bidirectional power conversion unit
- 4: output filter (first filter)
- 5: DC voltage detector
- 6: AC voltage detector
- 7, 11: switch
- 8: control unit
- 9: commercial power source
- 10: load
- 31, 32, 33: matrix converter circuit
- 100, 200, 300: bidirectional power conversion apparatus

## Claims

1. A filter circuit comprising:
a first filter that includes
two first capacitors connected in series,
two single-phase AC reactors connected to one ends of the two first capacitors, respectively,
a second capacitor connected at one end to a neutral point of the two first capacitors, and
a third capacitor connected between another ends of the two single-phase AC reactors; and
a second filter that includes
two common mode chokes, and
two fourth capacitors connected in series between one ends of the two common mode chokes, wherein
another end of the second capacitor is connected to a neutral point of the two fourth capacitors.

2. A bidirectional power conversion apparatus comprising:
the filter circuit according to claim 1; and
a bidirectional power conversion unit that includes a DC voltage input/output terminal and an AC voltage input/output terminal, wherein
the bidirectional power conversion unit is a current source inverter that uses the first capacitors as a smoothing capacitor and is capable of converting power bidirectionally,
the first filter is arranged between the AC voltage input/output terminal and a commercial power source or a load, and
the second filter is arranged between the DC voltage input/output terminal and a DC voltage source.

3. The bidirectional power conversion apparatus according to claim 2, further comprising:
a control unit that performs PWM control on the bidirectional power conversion unit in accordance with a voltage reference signal; and
a first switch capable of selectively connecting the first filter to any of the commercial power source and the load, wherein
the first switch outputs a state signal of the selective connection to the control unit.

4. The bidirectional power conversion apparatus according to claim 3, further comprising:
a DC voltage detector that detects a DC voltage of the DC voltage source and outputs a DC voltage signal to the control unit; and
an AC voltage detector that outputs a single-phase AC voltage signal to the control unit, wherein
when the first switch connects the first filter to the commercial power source, the control unit performs PWM control on the bidirectional power conversion unit such that the voltage reference signal matches the DC voltage signal, and, when the first switch connects the first filter to the load, the control unit performs PWM control on the bidirectional power conversion unit such that the voltage reference signal matches the single-phase AC voltage signal.

5. The bidirectional power conversion apparatus according to any one of claims 2 to 4, wherein
the bidirectional power conversion unit includes a DC reactor and a matrix converter circuit,
the DC reactor is connected at one end to a positive polarity side of the DC voltage input/output terminal,
the matrix converter circuit includes
first and fourth bidirectional switches connected at one ends to another end of the DC reactor,
second and fifth bidirectional switches connected at one ends to a positive polarity side of the DC voltage input/output terminal, and
third and sixth bidirectional switches connected at one ends to a negative polarity side of the DC voltage input/output terminal,
another ends of the first to third bidirectional switches are connected to a terminal U side of the AC voltage input/output terminal, and
another ends of the fourth to sixth bidirectional switches are connected to a terminal V side of the AC voltage input/output terminal.

6. The bidirectional power conversion apparatus according to any one of claims 2 to 4, wherein
the bidirectional power conversion unit includes a DC reactor and a matrix converter circuit,
the DC reactor is connected at one end to a positive polarity side of the DC voltage input/output terminal,
the matrix converter circuit includes
first and third bidirectional switches connected at one ends to another end of the DC reactor, and
second and fourth bidirectional switches connected at one ends to a negative polarity side of the DC voltage input/output terminal,
another ends of the first and second bidirectional switch are connected to a terminal U side of the AC voltage input/output terminal, and
another ends of the third and fourth bidirectional switches are connected to a terminal V side of the AC voltage input/output terminal.

7. The bidirectional power conversion apparatus according to any one of claims 2 to 4, further comprising a second switch that selects a polarity of the DC voltage source and connects the DC voltage source to the second filter, wherein
the bidirectional power conversion unit includes a DC reactor and a matrix converter circuit,
the DC reactor is connected at one end to a positive polarity side of the DC voltage input/output terminal,
the second switch outputs a state signal of selected polarity to the control unit,
the matrix converter circuit includes
first and third unidirectional switches that are connected at one ends to another end of the DC reactor and performs power conversion from the DC voltage input/output terminal side to the AC voltage input/output terminal side, and
second and fourth unidirectional switches that are connected at one ends to a negative polarity side of the DC voltage input/output terminal and performs power conversion from the AC voltage input/output terminal side to the DC voltage input/output terminal side,
another ends of the first and second unidirectional switches are connected to a terminal U side of the AC voltage input/output terminal, and
another ends of the third and fourth unidirectional switches are connected to a terminal V side of the AC voltage input/output terminal.

8. The bidirectional power conversion apparatus according to claim 7, wherein
in a case where the second switch connects the DC voltage source to the second filter with positive polarity and the load is connected,
the control unit performs PWM control on the bidirectional power conversion unit such that, when a potential of the terminal U of the AC voltage input/output terminal is equal to or larger than a potential of the terminal V, electrical energy of the DC voltage source is supplied to the load by turning the first and second unidirectional switches on, then turning the fourth unidirectional switch on, and then turning the second unidirectional switch off, and, when a potential of the terminal U of the AC voltage input/output terminal is smaller than a potential of the terminal V, electrical energy of the DC voltage source is supplied to the load by turning the third and fourth unidirectional switches on, then turning the second unidirectional switch on, and then turning the fourth unidirectional switch off, and
in a case where the second switch connects the DC voltage source to the second filter with reverse polarity and the commercial power source is connected,
the control unit performs PWM control on the bidirectional power conversion unit such that, when a potential of the terminal U of the AC voltage input/output terminal is equal to or larger than a potential of the terminal V, electrical energy of the commercial power source is supplied to the DC voltage source by turning the second and third unidirectional switches on, then turning the first unidirectional switch on, and then turning the third unidirectional switch off, and, when a potential of the terminal U of the AC voltage input/output terminal is smaller than a potential of the terminal V, electrical energy of the commercial power source is supplied to the DC voltage source by turning the first and fourth unidirectional switches on, then turning the third unidirectional switch on, and then turning the first unidirectional switch off.
